# FASCICULE DE BREVET EUROPEEN

(11) **EP 3 456 567 B1**
(45) Date de publication et mention de la délivrance du brevet: **11.08.2021**
(21) Numéro de dépôt: 18195535.2
(22) Date de dépôt: 19.09.2018
(51) Int. Cl.: B60J 5/14, B60J 5/12

(54) **COMPARTIMENT DE TRANSPORT DE MARCHANDISE À PORTE SECTIONNELLE ET VÉHICULE COMPRENANT UN TEL COMPARTIMENT**
WARENTRANSPORTABTEIL MIT BRANDSCHUTZTÜR, UND FAHRZEUG, DAS EIN SOLCHES ABTEIL UMFASST
GOODS TRANSPORT COMPARTMENT WITH SECTIONAL DOOR AND VEHICLE COMPRISING SUCH A COMPARTMENT

(30) Priorité: 19.09.2017 FR 1758653
(43) Date de publication de la demande: 20.03.2019
(73) Titulaire: Lecapitaine Industrie, 50000 Saint Lô (FR)
(72) Inventeur: YBERT, Florentin, 50800 FLEURY (FR)
(74) Mandataire: Lavoix

(56) Documents cités:
- EP-A1- 2 883 725
- EP-A1- 3 112 195
- WO-A1-94/01298
- FR-A1- 3 014 473
- US-A- 2 250 604

## Description

La présente invention concerne un compartiment de transport de marchandise tel que défini dans le préambule de la revendication 1.

L'invention concerne également un véhicule de transport de marchandises comprenant un tel compartiment.

Il existe de manière connue deux grands types de compartiments de transport de marchandise : les compartiments à portes battantes, et les compartiments à porte sectionnelle, du type précité. Ces compartiments équipent le plus souvent des véhicules automobiles destinés au transport de marchandise, couramment appelés « camions ».

Les compartiments à portes battantes comprennent deux flancs et un pavillon reliant les deux flancs, les flancs définissant entre eux une ouverture pour l'accès des marchandises à l'intérieur du compartiment, et des battants à axes verticaux pour ouvrir et fermer ladite ouverture.

Ce type de compartiment présentent de nombreux inconvénients, notamment parce que les battants nécessitent un grand dégagement pour pouvoir être ouverts, dégagement rarement présent à proximité des quais de chargement/déchargement de camions. Cela implique que, souvent, les battants doivent être ouverts à distance du quai de chargement/déchargement, puis le camion reculé jusqu'au quai, avec des risques de chute de marchandises à travers l'ouverture laissée ainsi dégagée. En outre, lorsque le compartiment est réfrigéré, cela nécessite une consommation d'énergie excessive pour maintenir la température désirée à l'intérieur du compartiment sous peine de rupture de la chaine de froid. Un autre inconvénient est que l'ouverture et la fermeture du compartiment nécessitent le plus souvent une intervention manuelle directe d'un utilisateur, généralement le chauffeur du camion.

En réponse à ces problèmes ont été développés les compartiments à porte sectionnelle. Ces compartiments ne nécessitent en effet aucun dégagement pour pouvoir être ouverts, de sorte qu'ils peuvent être ouverts même dans des espaces restreints. En outre, les portes sectionnelles sont facilement automatisables.

Les compartiments à porte sectionnelle connus présentent toutefois un grand nombre d'inconvénients, en comparaison avec les compartiments à portes battantes.

Tout d'abord, ces compartiments présentent une perte dans la capacité de chargement disponible en hauteur. En effet, lorsque le tablier de la porte sectionnelle est en position d'ouverture, il est habituellement ramené contre la face intérieure du pavillon. De ce fait, il est impossible de charger l'intérieur du compartiment jusqu'au pavillon. En outre, cela gêne l'installation de blocs réfrigérants contre le pavillon, ce qui complique la réalisation de compartiments réfrigérés à porte sectionnelle.

Ensuite, les compartiments à porte sectionnelle connus souffrent d'un espace de circulation réduit en largeur. En effet, l'encadrement dispose nécessairement de montants pour pouvoir guider le tablier jusqu'à sa position de fermeture, lesdits montants coopérant avec des organes de guidage portés par les lamelles du tablier. Or, ces organes de guidage ne peuvent pas empiéter latéralement hors de l'ouverture, sans quoi ils ne pourraient pas suivre les lamelles du tablier à l'intérieur du compartiment lors de l'ouverture du tablier. De ce fait, les montants de l'encadrement doivent être décalés vers l'intérieur de l'ouverture par rapport aux flancs pour pouvoir coopérer avec lesdits organes de guidage. En conséquence, l'espace de circulation, défini entre les montants, est plus étroit que l'ouverture.

Enfin, il est difficile de réaliser une bonne étanchéité entre le tablier et l'encadrement, ce qui provoque des vibrations du tablier sous l'effet des sollicitations mécaniques et aérodynamiques auxquels il est soumis lors du transport, et donc une usure accélérée des pièces, et cause des fuites thermiques importantes nécessitant une consommation d'énergie excessive pour maintenir la température désirée à l'intérieur du compartiment lorsque le compartiment est réfrigéré.

Une tentative de solution à ces problèmes a été apportée par la demande EP 2 692 561 ou EP 2 883 725. Dans cette demande, le tablier est rétracté au-dessus du pavillon du compartiment lorsqu'il est en position d'ouverture. Cela évite de perdre de la capacité de chargement en hauteur à l'intérieur du compartiment.

Toutefois, la solution décrite ne donne pas entière satisfaction. En effet, elle nécessite l'installation de structures sur le dessus du pavillon qui viennent augmenter la hauteur du compartiment et peuvent poser des problèmes de circulation et des problèmes d'homologation du camion sur lequel il est monté. En outre, elle nécessite de raccourcir la longueur du pavillon pour pouvoir être montée. De plus, elle requiert un tablier suffisamment étroit pour pouvoir pénétrer à l'intérieur de l'espace défini entre les flancs, ce qui, pour pouvoir réaliser l'étanchéité autour du tablier lorsqu'il est en position de fermeture, nécessite de positionner les montants de sorte qu'ils empiètent sur l'espace de circulation, en réduisant ainsi la largeur. Enfin, cette solution est complexe et chère à mettre en œuvre.

Un objectif de l'invention est de proposer un compartiment de transport de marchandise à porte sectionnelle présentant une capacité de chargement et un espace de circulation maximisés. D'autres objectifs consistent à minimiser la prise de hauteur du compartiment liée à l'installation de structures sur le dessus du pavillon et à minimiser le coût d'un tel compartiment.

A cet effet, l'invention a pour objet un compartiment de transport de marchandise du type précité, comprenant les caractéristiques de la partie caractérisante de la revendication 1.

Selon des modes de réalisation particulières de l'invention, le compartiment de transport de marchandise présente en outre l'une ou plusieurs des caractéristiques des revendications 2 à 13 et des caractéristiques suivantes, prise(s) isolément ou suivant toute(s) combinaison(s) techniquement possible(s) :
- le compartiment de transport de marchandise est réfrigéré ;
- chaque montant a une largeur transversale maximale inférieure ou sensiblement égale à l'épaisseur de flanc du flanc dans le prolongement duquel il est disposé ;
- chaque montant définit une cavité, débouchant sur l'ouverture, recevant une extrémité transversale de chaque lamelle du tablier lorsqu'il est en position de fermeture ;
- chaque montant comporte un rail de guidage propre à guider le mouvement du tablier entre ses positions d'ouverture et de fermeture ;
- le rail de guidage est positionné à l'intérieur de la cavité ;
- la porte sectionnelle comporte un joint solidaire de l'encadrement et apte à appuyer contre le tablier lorsqu'il est en position de fermeture, ledit joint comprenant deux tronçons verticaux chacun logé dans la cavité d'un montant respectif ;

L'invention a également pour objet un véhicule de transport de marchandise comprenant un compartiment de transport de marchandise tel que défini ci-dessus.

Selon un mode de réalisation particulier de l'invention, le véhicule de transport de marchandise présente également la caractéristique suivante :
- le véhicule de transport de marchandise est un véhicule automobile.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de côté d'un véhicule de transport de marchandises selon l'invention,
- la Figure 2 est une vue en perspective de l'arrière du véhicule de transport de marchandises de la Figure 1, un tablier équipant ledit arrière de véhicule étant dans une position de fermeture,
- la Figure 3 est une vue en perspective d'une coupe horizontale de l'arrière du véhicule de transport de marchandises de la Figure 1, prise selon un plan marqué III-III sur la Figure 2,
- la Figure 4 est une vue en coupe verticale de l'arrière du véhicule de transport de marchandises de la Figure 1, prise selon un plan marqué IV-IV sur la Figure 2,
- la Figure 5 est une vue en coupe verticale d'une lamelle du tablier équipant l'arrière du véhicule de transport de marchandises de la Figure 1, et

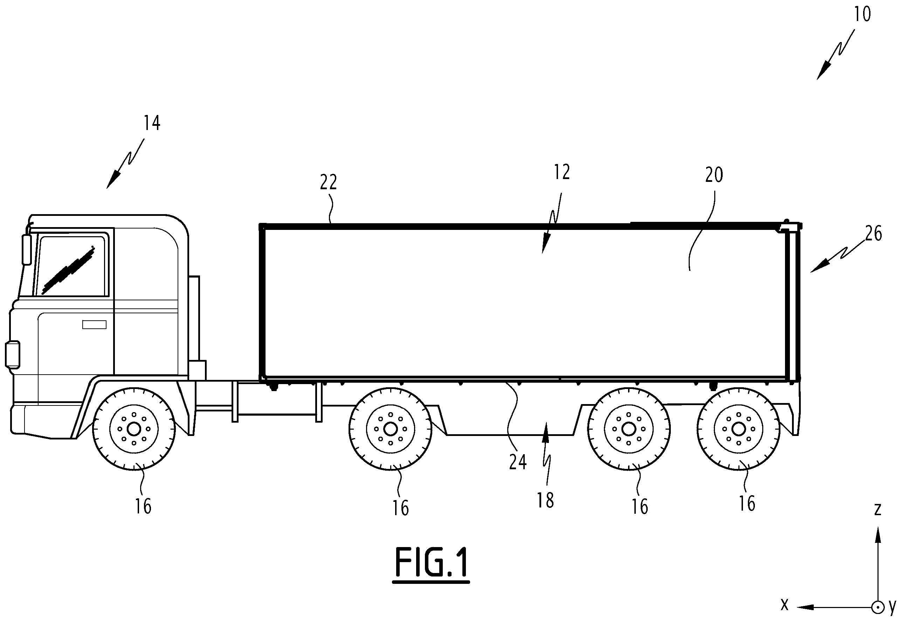

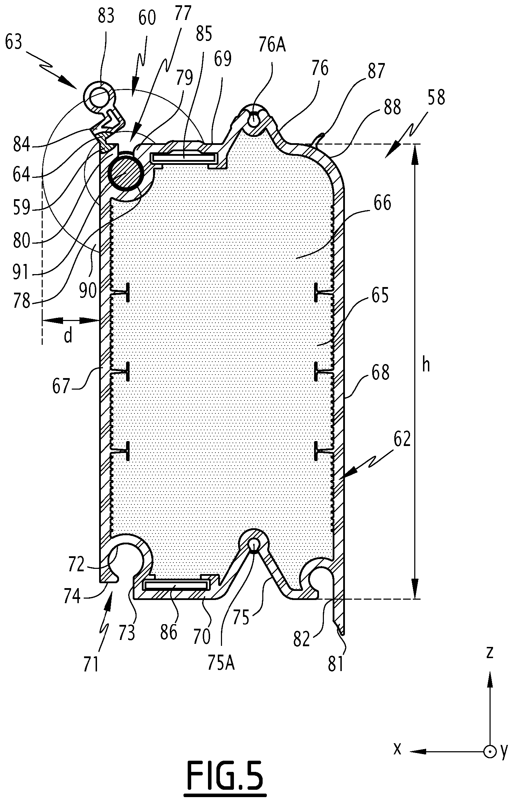

- la Figure 5 est une vue en coupe verticale d'une partie du véhicule de transport de marchandise de la Figure 1, le tablier équipant l'arrière dudit véhicule étant dans une position d'ouverture.

Le véhicule de transport de marchandise 10 représenté sur la Figure 1 consiste en un véhicule automobile, couramment appelé « camion », comportant un compartiment 12 destiné à recevoir des marchandises, une cabine 14, des roues 16, et un châssis 18.

Dans la suite, les termes d'orientation s'entendent en référence au repère d'orientation usuel des véhicules automobiles, représenté sur la Figure 1, et dans lequel on distingue :
- un axe longitudinal X, orienté de l'arrière vers l'avant, selon le sens de marche du véhicule 10,
- un axe transversal Y, orienté de la droite vers la gauche et formant avec l'axe X un plan horizontal, et
- un axe vertical Z, perpendiculaire au plan horizontal, orienté du bas vers le haut.

Comme visible sur la Figure 1, le compartiment 12 comporte deux flancs 20 verticaux espacés transversalement l'un de l'autre (seul le flanc 20 gauche apparaissant sur la Figure), un pavillon 22 horizontal reliant les bords supérieurs des deux flancs 20, et un plancher 24 reliant les extrémités inférieures des deux flancs 20. Les flancs 20, le pavillon 22 et le plancher 24 définissent ensemble une ouverture arrière 26 pour l'accès des marchandises à l'intérieur du compartiment 12.

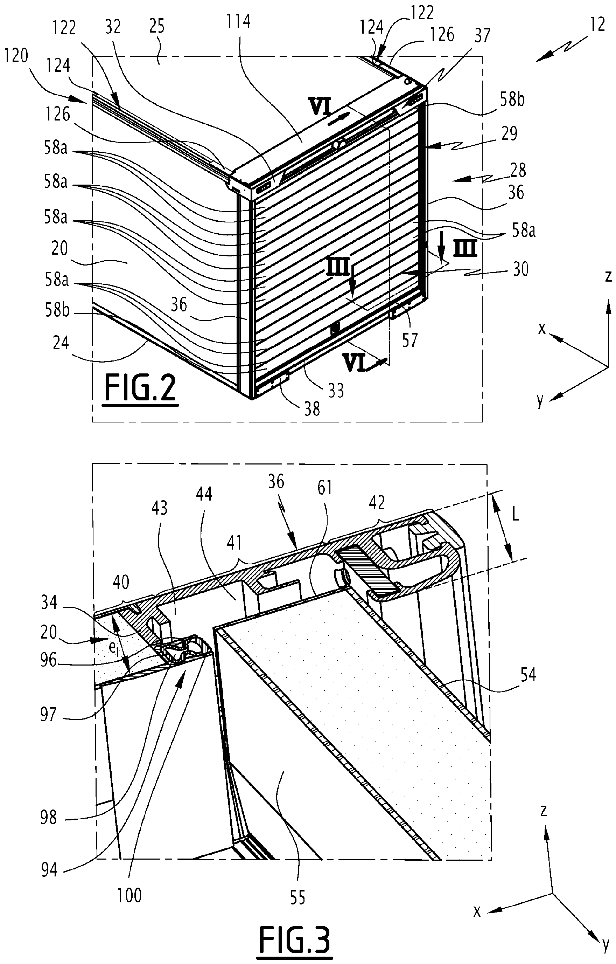

Les flancs 20 présentent chacun au niveau de l'ouverture 26 une épaisseur e₁ (Figure 3), prise selon la direction transversale Y, cette épaisseur e₁ étant sensiblement la même pour les deux flancs 20. De préférence, l'épaisseur e₁ est comprise entre 60 et 70 mm.

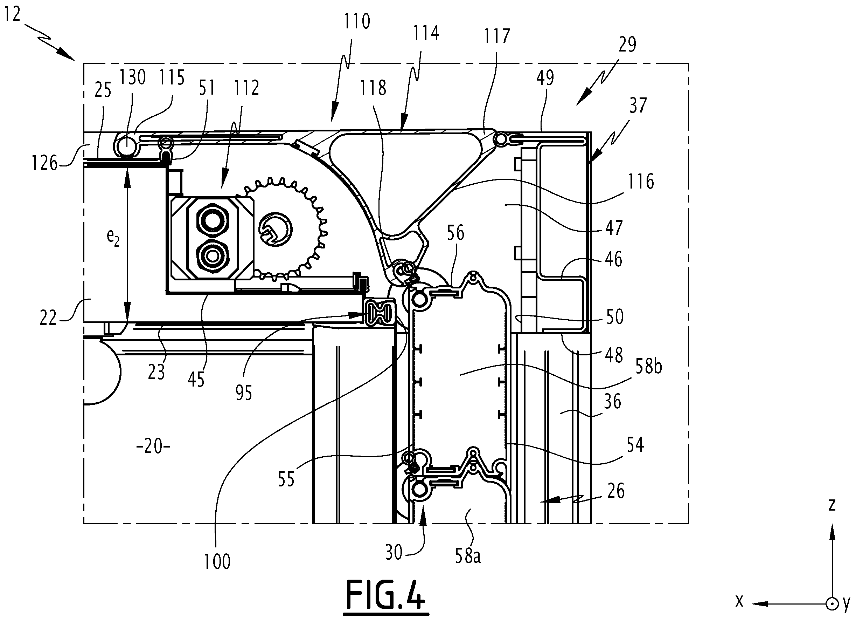

Le pavillon 22 présente quant à lui au niveau de l'ouverture 26 une épaisseur e₂ (Figure 4) prise selon la direction verticale Z entre une face inférieure 23 (Figure 4) et une face supérieure 25 (Figure 4), sensiblement plane, du pavillon 22. De préférence, l'épaisseur e₂ est comprise entre 120 et 125 mm.

Le compartiment 12 est en particulier un compartiment réfrigéré.

En référence à la Figure 2, le compartiment 12 comporte également une porte sectionnelle 28 propre à ouvrir et fermer sélectivement l'ouverture 26.

A cet effet, la porte sectionnelle 28 comporte un encadrement 29 encadrant l'ouverture 26, et un tablier 30 monté mobile relativement à l'encadrement 29 entre une position de fermeture, dans laquelle le tablier 30 est sensiblement vertical et obture l'ouverture 26, et une position d'ouverture, dans laquelle le tablier 30 est sensiblement horizontal et repose sur la face supérieure 25 du pavillon 22, à l'écart de l'ouverture 26.

L'encadrement 29 présente une extrémité proximale 32 au niveau de laquelle le tablier 30 est positionné lorsqu'il est en position d'ouverture, et une extrémité distale 33 opposée à l'extrémité proximale 32.

L'encadrement 29 comprend deux montants latéraux 36 disposés longitudinalement chacun dans le prolongement d'un flanc 20 respectif, une traverse supérieure 37 disposés longitudinalement dans le prolongement du pavillon 22, et une extérieure inférieure 38. Les traverses supérieure et inférieure 37, 38 raccordent respectivement les extrémités supérieure et inférieure des deux montants 36. La traverse supérieure 37 définit ici l'extrémité proximale 32 de l'encadrement 30, et la traverse inférieure 38 définit l'extrémité distale 33.

En référence à la Figure 3, chaque montant 36 présente successivement, de l'avant vers l'arrière, une base 40 de raccordement à un flanc 20 respectif, une portion intermédiaire 41, et une portion terminale 42 définissant une extrémité arrière du montant 36. Ces base 40, portion intermédiaire 41 et portion terminale 42 sont de préférence formées ensemble d'une seule pièce, typiquement par extrusion.

Côté extérieur, la base 40, la portion intermédiaire 41 et la portion terminale 42 s'inscrivent longitudinalement dans le prolongement les unes des autres et dans le prolongement du flanc 20. La portion terminale 42 présente sur sensiblement toute sa hauteur une largeur transversale I, prise selon la direction transversale Y, comprise de préférence entre 70 et 75 mm. Ainsi, lorsque l'épaisseur e₁ flanc 20 est comprise entre 60 et 70 mm, la largeur transversale I est sensiblement égale à ladite épaisseur ei, c'est-à-dire que le rapport de la largeur transversale I sur l'épaisseur de flanc e₁ est compris entre 0,80 et 1,25.

Cette largeur transversale I constitue la largeur transversale maximale du montant 36. Ainsi, le montant 36 n'empiète pas sur l'ouverture 26, de sorte que l'espace de circulation défini entre les montants 36 est maximisé.

La portion intermédiaire 41 présente quant à elle une largeur inférieure à la largeur I, en particulier inférieure à 50% de ladite largeur I. Ainsi, le montant 36 définit entre la portion terminale 42 et le flanc 20 une cavité 43, débouchant sur l'ouverture 26, propre à recevoir le tablier 30, la portion intermédiaire 41 formant le fond de ladite cavité 43.

Chaque montant 36 comporte également un rail de guidage 44 propre à guider le mouvement du tablier 30 entre ses positions d'ouverture et de fermeture. Ce rail de guidage 44 est de préférence formé d'une pièce avec la portion intermédiaire 41.

Ce rail de guidage 44 est positionné à l'intérieur de la cavité 43. Il présente une forme sensiblement rectiligne et s'étend sensiblement verticalement tout au long de la hauteur du montant 36.

En référence à la Figure 4 maintenant, la traverse supérieure 37 comprend un socle 45 de raccordement au pavillon 22 et une poutre transversale arrière 46 et définit, entre ledit socle 45 et ladite poutre transversale arrière 46, un passage 47 pour le tablier 30 entre ses positions d'ouverture et de fermeture. La traverse supérieure 37 présente par ailleurs une face inférieure 48 et une face supérieure 49.

La face inférieure 48 affleure sensiblement la face inférieure 23 du pavillon 22, c'est-à-dire que l'écart vertical entre les faces 48 et 23 est inférieur à 10 mm. Ainsi, la traverse supérieure 37 n'empiète pas sur l'ouverture 36, de sorte que l'espace de circulation défini entre les traverses 37, 38 est maximisé.

La face supérieure 49 est quant à elle disposée au-dessus du plan de la face supérieure 25 du pavillon 22. Avantageusement, l'écart vertical entre ladite face supérieure 49 et la face supérieure 25 du pavillon 22 est inférieur à 40 mm et est en particulier compris entre 25 et 30 mm.

Le passage 47 débouche à travers une fente inférieure 50 dans la face inférieure 48 de la traverse 37, et à travers une fenêtre supérieure 51 dans la face supérieure 49 de la traverse 37, la fente 50 et la fenêtre 51 étant chacune allongée suivant la direction transversale Y.

En variante (non représentée), la traverse 37 ne comprend pas de socle 45, une tôle d'habillage étant à la place rapportée sur le pavillon 22. Le passage 47 est alors défini entre la traverse supérieure 37 et le pavillon 22.

Toujours en référence à la Figure 4, le tablier 30 présente une face extérieure 54 orientée vers l'extérieur du compartiment 12, et une face intérieure 55 orientée vers l'intérieur du compartiment 12.

Le tablier 30 présente également une première extrémité 56 qui, lorsque le tablier 30 est en position de fermeture, forme une extrémité supérieure du tablier 30, et une deuxième extrémité 57 (Figure 2) opposée à la première extrémité 56 et qui, lorsque le tablier 30 est en position de fermeture, forme une extrémité inférieure du tablier 30.

Le tablier 30 comporte une pluralité de lamelles 58a, 58b disposées successivement entre les première et deuxième extrémités 56, 57 et articulées les unes aux autres par des charnières 59. Le tablier 30 comporte également, pour chaque lamelle 58a, 58b, deux organes de guidage 60, chacun propre à coopérer avec le rail de guidage 44 d'un montant 36 respectif pour guider les mouvements du tablier 30.

Ces lamelles 58a, 58b comprennent des lamelles d'extrémité 58b, l'une définissant la première extrémité 56 et l'autre définissant la deuxième extrémité 57, et une pluralité de lamelles intermédiaires 58a interposées entre les lamelles d'extrémité 58b.

Les lamelles 58a, 58b sont pour l'essentiel identiques les unes aux autres. La description des lamelles intermédiaires 58a donnée ci-dessous est donc, sauf mention explicite, applicable aux lamelles d'extrémité 58b.

Chaque lamelle intermédiaire 58a est allongée suivant la direction transversale Y et s'étend toute la largeur de l'ouverture 26, ses extrémités transversales 61 (Figure 3) étant chacune reçue dans la cavité 43 d'un montant 36 respectif.

En référence à la Figure 5, chaque lamelle 58a comprend un corps 62, un organe d'accrochage 63 et un organe de liaison 64 reliant l'organe d'accrochage au corps 62.

Le corps 62 est réalisé en un matériau plastique rigide, par exemple en polycarbonate (PC), en acrylonitrile butadiène styrène (ABS), ou en Acrylonitrile Styrène Acrylate (ASA). En variante (non représentée), il est réalisé en un matériau métallique.

Le corps 62 est allongé suivant la direction transversale Y et s'étend d'une extrémité transversale 61 de la lamelle 58a à l'extrémité transversale 61 opposée.

Le corps 62 est creux et définit une chambre 65 remplie d'un matériau 66 thermiquement isolant, par exemple une mousse.

Le corps 62 est de forme générale parallélépipédique avec une grande face intérieure 67 orientée vers l'intérieur du compartiment 12, une grande face extérieure 68 orientée vers l'extérieur du compartiment 12 et sensiblement parallèle à la grande face intérieure 67, une première petite face 69 joignant les grandes faces 67, 68 entre elles, ladite première petite face 69 formant une face supérieure du corps 62 lorsque le tablier 30 est en position de fermeture, et une deuxième petite face 70 joignant les grandes faces 67, 68 entre elles, ladite deuxième petite face 70 étant opposée à la première petite face 69 et formant une face inférieure du corps 62 lorsque le tablier 30 est en position de fermeture.

Les grandes faces intérieures 67 des corps 62 des différentes lamelles 58a, 58b forment ensemble la face intérieure 55 du tablier 30, et les grandes faces extérieures 68 des corps 62 des différentes lamelles 58a, 58b forment ensemble la face extérieure 54 du tablier 30.

Le corps 62 présente un élément d'accrochage 71 ayant une forme complémentaire à celle de l'organe d'accrochage 63. Cet élément d'accrochage 71 est ici formé par une cavité tubulaire 72, orientée suivant la direction transversale Y, de section verticale sensiblement complémentaire à celle de l'organe d'accrochage 63 et débouchant à travers une fente transversale 73 dans la deuxième petite face 70 du corps 62. En particulier, l'élément d'accrochage 71 est disposé le long d'un bord intérieur 74 de la deuxième petite face 70, constitué par le bord reliant la deuxième petite face 70 à la face intérieure 67.

Le corps 62 présente également une gorge 75 allongée suivant la direction transversale Y et formée dans la deuxième petite face 70, entre l'élément d'accrochage 71 et la face extérieure 62. Cette gorge 75 a ici une section verticale sensiblement en forme de V. Elle présente en son fond un fût de vissage 75A allongé suivant la direction transversale Y.

Le corps 62 présente encore une lèvre 76 allongée suivant la direction transversale Y et faisant saillie depuis la première petite face 69 à l'opposé de la chambre 65. Elle est sensiblement alignée avec la gorge 75 suivant un plan parallèle aux faces 67, 68 et présente une section verticale sensiblement complémentaire de la section de la gorge 75. Elle présente à sa pointe un fût de vissage 76A allongé suivant la direction transversale Y.

Le corps 62 présente en outre un élément 77 de fixation des organes de guidage 60 sur la lamelle 58a. Cet élément de fixation 77 est ici formé par une cavité tubulaire 78, orientée suivant la direction transversale Y, de section verticale sensiblement discoïdale, et débouchant à travers une fente transversale 79 dans la première petite face 69 du corps 62. En particulier, l'élément d'accrochage 77 est disposé le long d'un bord intérieur 80 de la première petite face 69, constitué par le bord reliant la première petite face 69 à la face intérieure 67.

Le corps 62 présente encore une nervure 81 allongée suivant la direction transversale Y et faisant saillie depuis la deuxième petite face 70 à l'opposé de la chambre 65, sensiblement parallèlement aux faces 67, 68. Cette nervure 81 est en particulier disposée le long d'un bord extérieur 82 de la deuxième petite face 70, constitué par le bord reliant la deuxième petite face 70 à la face extérieure 68.

L'organe d'accrochage 63 est lui aussi réalisé en un matériau plastique rigide, par exemple en polycarbonate (PC), en acrylonitrile butadiène styrène (ABS) ou en Acrylonitrile Styrène Acrylate (ASA). Il est en particulier réalisé dans le même matériau plastique que le corps 62.

L'organe d'accrochage 63 est allongé suivant la direction transversale Y et s'étend de préférence d'une extrémité transversale 61 de la lamelle 58a à l'extrémité transversale 61 opposée.

L'organe d'accrochage 63 comprend une tête 83 large reliée par un coude 84 étroit à l'organe de liaison 64. La tête 83 a une section verticale sensiblement complémentaire de celle de la cavité 72 de l'élément d'accrochage 71.

L'organe de liaison 64 est lui réalisé en matériau souple, typiquement en polyuréthane (PU). Il est allongé suivant la direction transversale Y et s'étend de préférence d'une extrémité transversale 61 de la lamelle 58a à l'extrémité transversale 61 opposée.

L'organe de liaison 64 est raccordé au corps 62 le long du bord intérieur 80 de la première petite face 69.

Pour la lamelle d'extrémité 58b définissant la deuxième extrémité 57 et pour chaque lamelle intermédiaire 58a, l'organe d'accrochage 63 coopère avec l'élément d'accrochage 71 de la lamelle 58a, 58b adjacente disposée immédiatement au-dessus lorsque le tablier 30 est en position de fermeture en ayant sa tête 83 reçue dans la cavité 72. Cela n'est pas le cas pour la lamelle d'extrémité 58b définissant la première extrémité 56 puisque celle-ci n'a pas de lamelle disposée immédiatement au-dessus lorsque le tablier 30 est en position de fermeture.

Ainsi, les lamelles 58a, 58b sont rendues solidaires les unes des autres par la coopération des organes d'accrochage 63 avec les éléments d'accrochage 71, les organes de liaison 64 conférant la souplesse permettant l'articulation des différentes lamelles 58a, 58b les unes par rapport aux autres et constituant de ce fait les charnières 59.

Le corps 62, l'organe d'accrochage 63 et l'organe de liaison 64 sont en particulier formés ensemble par coextrusion de matières plastiques. Cette solution permet une excellente tenue des charnières 59, en même temps qu'elle est particulièrement économique.

Chaque lamelle 58a comprend également deux renforts 85, 86, chacun allongé suivant la direction transversale Y, dont un premier renfort 85 logé dans la chambre 65 contre la première petite face 69, entre l'organe de liaison 64 et la lèvre 76, et un deuxième renfort 86 logé dans la chambre 65 contre la deuxième petite face 70, entre l'élément d'accrochage 71 et la gorge 75. Chaque renfort 85, 86 est par exemple en acier, ou en pultrudé.

Chaque lamelle 58a comprend encore un joint 87, souple, disposé le long d'un bord extérieur 88 de la première petite face 69 constitué par le bord reliant ladite première petite face 69 à la face extérieure 68. Ce joint 87 est en particulier constitué par une nervure allongée suivant la direction transversale Y et s'étendant sensiblement d'une extrémité transversale 61 de la lamelle 58a à l'extrémité transversale 61 opposée.

Le joint 87 est réalisé en matériau souple, typiquement en polyuréthane (PU).

Le joint 87 est avantageusement formé par coextrusion de matières plastiques en même temps que le corps 62, l'organe d'accrochage 63 et l'organe de liaison 64.

Pour la lamelle d'extrémité 58b définissant la deuxième extrémité 57 et pour chaque lamelle intermédiaire 58a, le joint 87 est apte à venir en appui contre la deuxième petite face 70 de la lamelle 58a, 58b adjacente disposée immédiatement au-dessus lorsque le tablier 30 est en position de fermeture, réalisant ainsi une étanchéité avec ladite lamelle 58a, 58b adjacente.

Chaque lamelle 58a, 58b présente hauteur h, définie comme étant la distance de la première petite face 69 du corps 62 à la deuxième petite face 70. Selon l'invention, le rapport de l'épaisseur de pavillon e₂ sur cette hauteur h est supérieur à 0,75. Ce rapport permet que les lamelles 58a, 58b puissent pivoter suivant un faible rayon de courbure inférieur à l'épaisseur de pavillon e₂ entre leur position verticale lorsque le tablier 30 est fermé et leur position horizontale lorsque le tablier 30 est ouvert. Cela évite de devoir prévoir pour les lamelles 58a, 58b une trajectoire passant entre les flancs 20, comme c'est le cas dans EP 2 692 561, et permet de positionner les montants 36 tels que cela a été décrit plus haut.

Chaque organe de guidage 60 est disposé à l'une des extrémités transversales 61 de la lamelle 58a, 58b et est typiquement formé par une roulette 90 montée sur un arbre 91 logé dans la cavité 78 de l'élément de fixation 77, ladite roulette 90 étant apte à être insérée, au moins lorsque le tablier 30 est en position de fermeture, dans le rail de guidage 44 avec lequel l'organe de guidage 60 coopère.

La roulette 90 fait saillie vers l'intérieur du compartiment 12 par rapport à la face intérieure 67 du corps 62 d'une distance d avantageusement comprise entre 15 et 25 mm, plus particulièrement entre 15 et 20 mm.

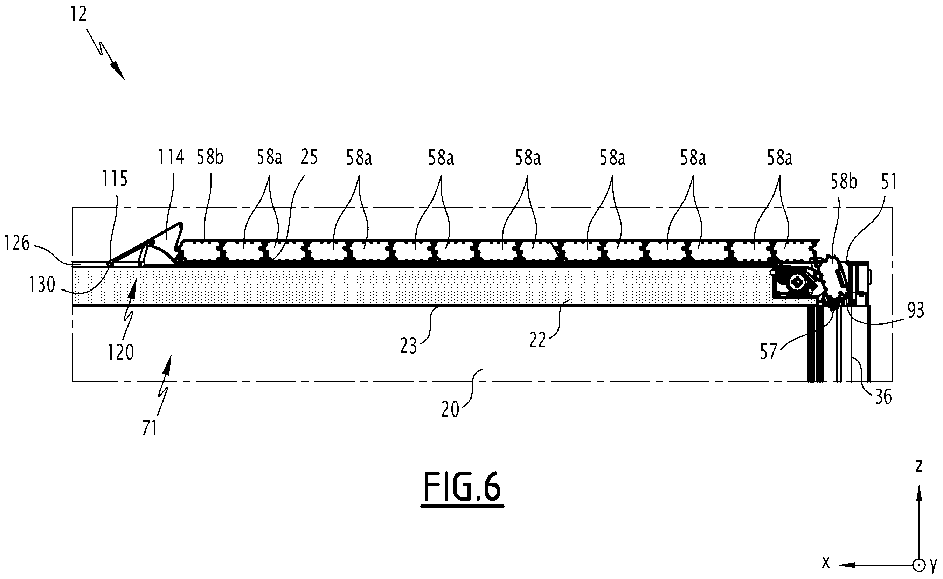

En référence maintenant aux Figures 3 et 6, la porte sectionnelle 28 comporte également un système d'étanchéité pour assurer l'étanchéité entre l'encadrement 29 et le tablier 30 lorsque le tablier 30 est en position de fermeture. Ce système d'étanchéité comprend un joint inférieur 93 (Figure 6) monté sur la deuxième extrémité 57 du tablier 30, et un joint gonflable 94 (Figure 3) monté sur l'encadrement 29.

Le joint inférieur 93 est propre à coopérer avec l'encadrement 29 pour assurer l'étanchéité entre la deuxième extrémité 57 du tablier 30 et la traverse inférieure 38 lorsque le tablier 30 est en position de fermeture. A cet effet, le joint inférieur 93 s'étend de préférence toute la largeur du tablier 30. Ainsi, lorsque la porte sectionnelle 28 est en position de fermeture, le joint inférieur 93 est serré entre la deuxième extrémité 57 du tablier 30 et la traverse inférieure 38, ce qui assure une bonne étanchéité entre le tablier 30 et l'encadrement 29 au niveau de la deuxième extrémité 57.

Le joint gonflable 94 présente une forme en « U » renversé avec un tronçon horizontal 95 (Figure 4) formant le fond du « U » et deux tronçons verticaux 96 formant les branches du « U ».

Chacun des tronçons verticaux 96 est disposé à l'intérieur du compartiment 12 par rapport aux rails de guidage 44. Ainsi, les rails de guidage 44 sont positionnés dans une zone « hors froid » qui évite que les organes de guidage 60 ne prennent en glace sur l'encadrement 29.

Par ailleurs, chacun des tronçons verticaux 96 est logé dans la cavité 43 d'un montant 36 respectif. Ainsi, ces tronçons verticaux 96 sont protégés et ne risquent pas d'être accrochés à l'occasion du chargement ou du déchargement de marchandises à travers l'ouverture 26.

Chacun desdits tronçons 95, 96 est formé par une membrane élastique 97 définissant un canal intérieur 98 propre à recevoir du fluide sous pression et présentant une surface de contact 100 apte à appuyer contre la face intérieure 55 du tablier 30 lorsque ce dernier est en position de fermeture.

La membrane élastique 97 est propre à occuper une position de repos, dans laquelle la membrane 97, et plus particulièrement la surface de contact 100, est à l'écart du tablier 30 fermé, lorsque le canal intérieur 98 est vide, c'est-à-dire lorsqu'il est à une pression inférieure ou égale à la pression atmosphérique, et une position déployée, dans laquelle la surface de contact 100 est plaquée contre la face intérieure 55 du tablier 30 fermé, lorsqu'un fluide sous pression, typiquement de l'air, est injecté dans le canal intérieur 98.

Le joint gonflable 94 est en particulier continu, c'est-à-dire que le tronçon horizontal 95 est accolé à chacun des tronçons verticaux 96. En outre, les membranes 97 des différents tronçons 95, 96 sont avantageusement constituées par une unique membrane continue commune auxdits tronçons 95, 96. Cela permet d'assurer une étanchéité continue sur tout le contour de la porte 28.

De retour à la Figure 4, la porte sectionnelle 28 comprend également un élément obturateur 110 pour obturer la fenêtre 51 lorsque le tablier 30 est dans sa position de fermeture, et un système d'entraînement 112 pour déplacer le tablier 30 entre ses positions d'ouverture et de fermeture.

L'élément obturateur 110 comprend en particulier un volet 114 sensiblement plan et un organe 116 d'articulation du volet 114 à la lamelle d'extrémité 58b définissant la première extrémité 56 du tablier 30, pour le pivotement du volet 114 relativement à ladite lamelle 58b autour d'un axe d'articulation (non représenté) sensiblement transversal.

Le volet 114 est sensiblement rectangulaire et présente un bord avant 115, sensiblement transversal, et un bord arrière 117, sensiblement transversal. Il est allongé suivant la direction transversale Y.

Le volet 114 présente sensiblement les mêmes dimensions que la fenêtre 51. Ainsi, lorsqu'il est disposé en travers de la fenêtre 51, il obture ladite fenêtre 51.

L'organe d'articulation 116 fait saillie depuis une face du volet 114. Il présente un évidement 118, à distance du volet 114, dans lequel est reçu l'organe d'accrochage 63 de la lamelle d'extrémité 58b. Ainsi, l'axe d'articulation du volet 114 à la lamelle d'extrémité 58b est espacé du volet 114.

Le système d'entraînement 112 est disposé dans le passage 47 défini par la traverse supérieure 37. Il a avantageusement une hauteur verticale inférieure à l'épaisseur de pavillon e2.

Le système d'entraînement 112 comporte de manière connue un module d'équilibrage propre à contrebalancer le poids du tablier 30, et un module de motorisation propre à entraîner les mouvements du tablier 30 entre ses positions d'ouverture et de fermeture.

En référence aux Figures 2 et 6, le compartiment 12 comprend également un dispositif 120 de guidage du tablier 30 propre à guider le tablier 30 en translation suivant la direction longitudinale X le long de la face supérieure 25 du pavillon 22 lors de son déplacement entre ses positions d'ouverture et de fermeture.

Ce dispositif de guidage 120 comprend deux organes de guidage 122, chacun disposé le long d'un bord latéral respectif du pavillon 22.

Chaque organe de guidage 122 comprend une coulisse longitudinale 124, solidaire du pavillon 22, et un coulisseau 126, attaché au tablier 30 et monté sur la coulisse 124 de manière à être mobile en translation par rapport au pavillon 22 suivant la direction longitudinale X.

La coulisse 124 est en particulier montée directement sur la face supérieure 25 du pavillon 22. Cela permet de minimiser la hauteur des structures installées sur le pavillon 22 et donc l'augmentation de hauteur du compartiment 12 causée par ces structures.

Avantageusement, la coulisse 124 ne fait pas saillie de plus de 40 mm vers le haut par rapport à la face supérieure 25 du pavillon 22.

La coulisse 124 est typiquement formée par un rail en U orienté suivant la direction longitudinale X et couché sur le côté, ledit rail présentant une ouverture débouchant transversalement face à un plan longitudinal médian (non représenté) du compartiment 12.

Le coulisseau 126 a avantageusement une hauteur sensiblement égale à celle de la coulisse 124 et il est partiellement logé dans ladite coulisse 124. De la sorte, l'espace perdu en hauteur entre la limite de gabarit du compartiment 12 et la face inférieure du pavillon 22 est de moins de 165 mm.

Le volet 114 est articulé au coulisseau 126 et forme une pièce de liaison du coulisseau 126 au tablier 30. En particulier, le volet 114 est articulé au coulisseau 126 par l'intermédiaire d'une liaison pivot 130 disposée le long du bord avant 115 du volet 114.

Avantageusement, la liaison pivot 130 est équipée d'un organe de rappel (non représenté) sollicitant le coulisseau 126 transversalement vers le fond de la coulisse 124.

Un procédé d'ouverture du tablier 30 va maintenant être décrit, en référence aux Figures.

Initialement, le tablier 30 est dans sa position de fermeture. Un opérateur actionne alors une commande pour activer le système d'entraînement 112. Celui-ci se met en fonctionnement et entraîne la remontée des lamelles 58a, 58b le long des rails de guidage 44.

En remontant, la lamelle d'extrémité 58b définissant la première extrémité 56 pousse sur le volet 114, qui se soulève partiellement, dégageant la fenêtre 51. Le bord avant 115 du volet 114 est toutefois empêché de se soulever par sa liaison avec le coulisseau 124 ; de ce fait, le volet 114 bascule vers l'avant. Puis, toujours sous l'effet de la poussée du tablier 30, le volet 114 avance vers l'avant du compartiment 12, le long du pavillon 22, en étant guidé par le dispositif de guidage 120.

En avançant, le volet 114 dégage le pavillon des éventuels obstacles qui y sont présents, tels que des branches ou des impuretés. Le dégagement de ces obstacles est facilité par la position inclinée du volet 114.

A mesure que le tablier 30 monte, les lamelles 58a, 58b sortent les unes après les autres des montants 36 et entrent dans le passage 47, où elles basculent vers l'avant de manière à se retrouver horizontales une fois complètement sorties du passage 47. Elles sont alors positionnées au-dessus du pavillon 22 et reposent sur ce dernier par l'intermédiaire de leurs organes de guidage 60. Grâce au fait que les organes de guidage 60 comprennent des roulettes 90, le déplacement des lamelles 58a, 58b le long du pavillon 22 peut se faire sans frottement. En outre, grâce à la distance d de saillie des roulettes 90, les lamelles 58a, 58b sont maintenues à une distance suffisante du pavillon 22 pour ne pas frotter contre d'éventuelles impuretés présentes sur le pavillon 22.

Le déplacement du tablier 30 est ainsi poursuivi jusqu'à ce que toutes les lamelles 58a, 58b soient sorties des montants 36, le tablier 30 étant alors en position d'ouverture et l'ouverture 36 dégagée sensiblement intégralement.

Grâce à l'invention décrite ci-dessus, la capacité de chargement du compartiment 12 est maximisée puisque le tablier 30 n'empiète jamais sur l'intérieur du compartiment 12.

En outre, l'espace de circulation est lui aussi maximisé puisque les montants 36 n'empiètent pas ou très peu sur l'ouverture 26.

De plus, très peu de structures sont installées sur le pavillon 22, de sorte que la prise de hauteur du compartiment 12 est minime.

Enfin, les coûts de fabrication du compartiment sont minimisés, notamment grâce au mode de production particulièrement économique des lamelles 58a, 58b du tablier 30. sont alors positionnées au-dessus du pavillon 22 et reposent sur ce dernier par l'intermédiaire de leurs organes de guidage 60. Grâce au fait que les organes de guidage 60 comprennent des roulettes 90, le déplacement des lamelles 58a, 58b le long du pavillon 22 peut se faire sans frottement. En outre, grâce à la distance d de saillie des roulettes 90, les lamelles 58a, 58b sont maintenues à une distance suffisante du pavillon 22 pour ne pas frotter contre d'éventuelles impuretés présentes sur le pavillon 22.

Le déplacement du tablier 30 est ainsi poursuivi jusqu'à ce que toutes les lamelles 58a, 58b soient sorties des montants 36, le tablier 30 étant alors en position d'ouverture et l'ouverture 36 dégagée sensiblement intégralement.

Grâce à l'invention décrite ci-dessus, la capacité de chargement du compartiment 12 est maximisée puisque le tablier 30 n'empiète jamais sur l'intérieur du compartiment 12.

En outre, l'espace de circulation est lui aussi maximisé puisque les montants 36 n'empiètent pas ou très peu sur l'ouverture 26.

De plus, très peu de structures sont installées sur le pavillon 22, de sorte que la prise de hauteur du compartiment 12 est minime.

Enfin, les coûts de fabrication du compartiment sont minimisés, notamment grâce au mode de production particulièrement économique des lamelles 58a, 58b du tablier 30.

## Revendications

1. Compartiment de transport de marchandise (12) comprenant deux flancs (20) et un pavillon (22) reliant les deux flancs (20), les flancs (20) et le pavillon (22) définissant entre eux une ouverture (26) pour l'accès des marchandises à l'intérieur du compartiment (12), et le pavillon (22) présentant, au niveau de l'ouverture (26), une épaisseur de pavillon (e₂), le compartiment (12) comprenant en outre une porte sectionnelle (28) comportant un encadrement (29) encadrant l'ouverture (26) et un tablier (30) monté mobile relativement à l'encadrement (29) entre une position de fermeture, dans laquelle il obture l'ouverture (26), et une position d'ouverture, dans laquelle il est à l'écart de l'ouverture (26), ledit tablier (30) étant formé d'une pluralité de lamelles (58a, 58b) successives articulées les unes aux autres,
**caractérisé en ce que** le rapport de l'épaisseur de pavillon (e₂) sur la hauteur (h) de chaque lamelle (58a, 58b) est supérieur à 0,75, l'épaisseur du pavillon (e2) étant prise selon une direction verticale (Z) entre une face inférieure et une face supérieure, sensiblement plane, du pavillon (22), et
**en ce que** le tablier (30) repose, en position d'ouverture, sur une face supérieure (25) du pavillon (22).

2. Compartiment de transport de marchandise (12) selon la revendication 1, dans lequel l'encadrement (29) comporte au moins deux montants (36) verticaux disposés transversalement de part et d'autre de l'ouverture (26), chacun dans le prolongement d'un flanc (20) respectif.

3. Compartiment de transport de marchandise (12) selon l'une quelconque des revendications précédentes, dans lequel l'encadrement (29) comporte une traverse supérieure (37) disposée longitudinalement dans le prolongement du pavillon (22), ladite traverse supérieure (37) présentant une face inférieure (48) affleurant sensiblement une face inférieure (23) du pavillon (22) et une face supérieure (49) opposée à ladite face inférieure (48), la traverse supérieure (37) définissant en outre un passage (47) pour le tablier (30) entre ses positions de fermeture et d'ouverture, ledit passage (47) débouchant à travers une fente (50) dans la face inférieure (48) de la traverse supérieure (37), et à travers une fenêtre (51) dans la face supérieure (49) de la traverse supérieure (37).

4. Compartiment de transport de marchandise (12) selon la revendication 3, dans lequel la porte sectionnelle (28) comprend un élément obturateur (110) pour obturer la fenêtre (51) lorsque le tablier (30) est dans sa position de fermeture.

5. Compartiment de transport de marchandise selon la revendication 4, dans lequel l'élément obturateur (110) comprend un volet (114) articulé à une lamelle d'extrémité (58b) du tablier (30).

6. Compartiment de transport de marchandise (12) selon l'une quelconque des revendications 1 à 5, comprenant un dispositif (120) de guidage du tablier (30) propre à guider le tablier (30) en translation le long d'une face supérieure (25) du pavillon (22) lors de son déplacement entre ses positions d'ouverture et de fermeture.

7. Compartiment de transport de marchandise (12) selon la revendication 6, dans lequel le dispositif de guidage (120) comprend au moins un organe de guidage (122), le ou chaque organe de guidage (122) comprenant une coulisse longitudinale (124) solidaire du pavillon (22) et un coulisseau (126) monté sur la coulisse (124) de manière à être mobile en translation longitudinale par rapport au pavillon (22), le coulisseau (126) étant attaché au tablier (30).

8. Compartiment de transport de marchandise (12) selon les revendications 5 et 7 prises ensemble, dans lequel le volet (114) est articulé au coulisseau (126) et forme une pièce de liaison du coulisseau (126) au tablier (30).

9. Compartiment de transport de marchandise (12) selon la revendication 7 ou 8, dans lequel la coulisse (124) est montée directement sur la face supérieure (25) du pavillon (22).

10. Compartiment de transport de marchandise (12) selon l'une quelconque des revendications précédentes, dans lequel les lamelles (58a, 58b) comprennent des lamelles intermédiaires (58a) comprenant chacune un corps (62) en matériau rigide, un organe d'accrochage (63), et un organe de liaison (64) en matériau souple reliant l'organe d'accrochage (63) au corps (62), l'organe d'accrochage (63) coopérant avec un élément complémentaire (71) formé dans le corps (62) d'une lamelle (58a, 58b) adjacente, et l'organe de liaison (64) formant une charnière (59) entre ladite lamelle intermédiaire (58a) et la lamelle (58a, 58b) adjacente.

11. Compartiment de transport de marchandise (12) selon la revendication 10, dans lequel l'organe d'accrochage (63) est en matériau rigide.

12. Compartiment de transport de marchandise (12) selon la revendication 10 ou 11, dans lequel le corps (62), l'organe de liaison (64) et l'organe d'accrochage (63) sont formés ensemble par coextrusion de matières plastiques.

13. Compartiment de transport de marchandise (12) selon l'une quelconque des revendications précédentes, dans lequel le tablier (30) comporte, pour chaque lamelle (58a, 58b), deux roulettes (90) chacune disposée à une extrémité transversale (61) de la lamelle (58a, 58b) et faisant saillie vers l'intérieur du compartiment (12) par rapport à une face (67) de la lamelle (58a, 58b) orientée vers l'intérieur du compartiment (12).

14. Véhicule de transport de marchandises (10) comprenant un compartiment (12) selon l'une quelconque des revendications précédentes.

## Patentansprüche

1. Warentransport-Abteil (12), aufweisend zwei Flanken (20) und ein Dach (22), das die beiden Flanken (20) verbindet, wobei die Flanken (20) und das Dach (22) zwischen einander eine Öffnung (26) definieren für den Zugang der Waren ins Innere des Abteils (12) und wobei das Dach (22) auf Niveau der Öffnung (26) eine Dachdicke (e₂) hat, wobei das Abteil (12) ferner aufweist eine Sektionaltür (28), die aufweist einen Rahmen (29), der die Öffnung (26) umrahmt, und eine Türwand (30), die relativ zu dem Rahmen (29) bewegbar montiert ist zwischen einer Schließposition, in welcher sie die Öffnung (26) verschließt, und einer Offenposition, in welcher sie im Abstand von der Öffnung (26) ist, wobei die Türwand (30) aus einer Mehrzahl von aufeinanderfolgenden Lamellen (58a, 58b) gebildet ist, die miteinander gelenkverbunden sind,
**dadurch gekennzeichnet, dass** das Verhältnis der Dachdicke (e₂) zur Höhe (h) jeder Lamelle (58a, 58b) größer als 0,75 ist, wobei die Dachdicke (e₂) genommen ist entlang einer Vertikalrichtung (Z) zwischen einer Unterseite und einer Oberseite, im Wesentlichen plan, des Dachs (22), und
dass die Türwand (30) in Offenposition auf der Oberseite des Dachs (22) aufliegt.

2. Warentransport-Abteil (12) gemäß Anspruch 1, wobei der Rahmen (29) wenigstens zwei vertikale Pfosten (36) aufweist, die transversal beidseitig der Öffnung (26) angeordnet sind, jeder in der Verlängerung einer zugeordneten Flanke (20).

3. Warentransport-Abteil (12) gemäß irgendeinem der vorhergehenden Ansprüche, wobei der Rahmen (29) eine obere Traverse (37) aufweist, die längs in der Verlängerung des Dachs (22) angeordnet ist, wobei die obere Traverse (37) eine untere Seite (48), die mit einer unteren Fläche (23) des Dachs (22) im Wesentlichen bündig ist, und eine Oberseite (49) hat, die der unteren Seite (48) entgegengesetzt ist, wobei die obere Traverse (37) ferner eine Passage (47) definiert für die Türwand (30) zwischen deren Schließ- und Offenposition, wobei die Passage (47) durch einen Spalt (50) in der unteren Seite (48) der oberen Traverse (37) und durch ein Fenster (51) in der Oberseite (49) der oberen Traverse (37) ausmündet.

4. Warentransport-Abteil (12) gemäß Anspruch 3, wobei die Sektionaltür (28) ein Verschließelement (110) aufweist zum Verschließen des Fensters (51), wenn die Türwand (30) in ihrer Schließposition ist.

5. Warentransport-Abteil gemäß Anspruch 4, wobei das Verschließelement (110) eine Klappe (114) aufweist, die mit einer Endlamelle (58b) der Türwand (30) gelenkverbunden ist.

6. Warentransport-Abteil (12) gemäß irgendeinem der Ansprüche 1 bis 5, aufweisend eine Vorrichtung (120) zum Führen der Türwand (30), die imstande ist, die Türwand (30) während deren Verlagerung zwischen deren Offen- und Schließposition entlang einer Oberseite (25) des Dachs (22) translatorisch zu führen.

7. Warentransport-Abteil (12) gemäß Anspruch 6, wobei die Führungsvorrichtung (120) wenigstens ein Führungsorgan (122) aufweist, wobei das oder jedes Führungsorgan (122) aufweist eine Längs-Führungskulisse (124), die fest mit dem Dach (22) verbunden ist, und ein Verschiebestück (126), das an der Führungskulisse (124) angebracht ist, um bezüglich des Dachs (22) längs translatorisch bewegbar zu sein, wobei das Verschiebestück (126) an der Türwand (30) angebracht ist.

8. Warentransport-Abteil (12) gemäß den Ansprüchen 5 und 7 zusammengenommen, wobei die Klappe (114) mit dem Verschiebestück (126) gelenkverbunden ist und ein Bauteil zur Verbindung des Verschiebestücks (126) mit der Türwand (30) bildet.

9. Warentransport-Abteil (12) gemäß Anspruch 7 oder 8, wobei die Führungskulisse (124) direkt an der Oberseite (25) des Dachs (22) angebracht ist.

10. Warentransport-Abteil (12) gemäß irgendeinem der vorhergehenden Ansprüche, wobei die Lamellen (58a, 58b) Zwischenlamellen (58a) aufweisen, die jeweils aufweisen einen Körper (62) aus einem starren Material, ein Ankupplungsorgan (63) und ein Verbindungsorgan (64) aus einem biegeweichen Material, welches das Ankupplungsorgan (63) mit dem Körper (62) verbindet, wobei das Ankupplungsorgan (63) mit einem Komplementärelement (71) zusammenwirkt, das in dem Körper (62) einer benachbarten Lamelle (58a, 58b) gebildet ist, wobei das Verbindungsorgan (64) ein Scharnier (59) zwischen der besagten Zwischenlamelle (58a) und der benachbarten Lamelle (58a, 58b) bildet.

11. Warentransport-Abteil (12) gemäß Anspruch 10, wobei das Ankupplungsorgan (63) aus einem starren Material ist.

12. Warentransport-Abteil (12) gemäß Anspruch 10 oder 11, wobei der Körper (62), das Verbindungsorgan (64) und das Ankupplungsorgan (63) gemeinsam durch Ko-Extrusion von Kunststoffmaterialien ausgebildet sind.

13. Warentransport-Abteil (12) gemäß irgendeinem der vorhergehenden Ansprüche, wobei die Türwand (30) für jede Lamelle (58a, 58b) aufweist zwei Rollen (90), von denen jede an einem Transversalende (61) der Lamelle (58a, 58b) angeordnet ist und zum Inneren des Abteils (12) hin vorsteht bezüglich einer zum Inneren des Abteils (12) hin gewandten Seite (67) der Lamelle (58a, 58b).

14. Warentransport-Fahrzeug (10) mit einem Abteil (12) gemäß irgendeinem der vorhergehenden Ansprüche.

## Claims

1. Compartment for transporting merchandise (12), comprising two sides (20) and a roof (22) connecting the two sides (20), the sides (20) and the roof (22) defining between them an opening (26) for access to the merchandise inside the compartment (12), and the roof (22) having, at the level of the opening (26), a roof thickness (e₂), the compartment (12) comprising, furthermore, a sectional door (28) comprising a frame (29) framing the opening (26) and a roller shutter (30) mounted movable relative to the frame (29) between a closed position, in which it seals the opening (26), and an open position, in which it is at a spacing from the opening (26), said roller shutter (30) being formed from a plurality of successive lamellae (58a, 58b) articulated relative to each other,
**characterised in that** the ratio of the thickness of the roof (e₂) over the height (h) of each lamella (58a, 58b) is greater than 0.75, the thickness of the roof (e₂) being taken according to a vertical direction (Z) between a lower face and an upper face, essentially planar, of the roof (22), and
**in that** the roller shutter (30) sits, in the open position, on an upper face (25) of the roof (22).

2. Compartment for transporting merchandise (12) according to claim 1, in which the frame (29) comprises at least two vertical stanchions (36) disposed transversely on both sides of the opening (26), each in the extension of a respective side (20).

3. Compartment for transporting merchandise (12) according to any of the preceding claims, in which the frame (29) comprises an upper cross-piece (37) which is disposed longitudinally in the extension of the roof (22), said upper cross-piece (37) having a lower face (48) substantially flush with a lower face (23) of the roof (22) and an upper face (49) opposite said lower face (48), the upper cross-piece (37) defining, furthermore, a passage (47) for the roller shutter (30) between its closed and open positions, said passage (47) opening through a slot (50) in the lower face (48) of the upper cross-piece (37), and through a window (51) in the upper face (49) of the upper cross-piece (37).

4. Compartment for transporting merchandise (12) according to claim 3, in which the sectional door (28) comprises a sealing element (110) in order to seal the window (51) when the roller shutter (30) is in its closed position.

5. Compartment for transporting merchandise (12) according to claim 4, in which the sealing element (110) comprises a flap (114) articulated with an end lamella (58b) of the roller shutter (30).

6. Compartment for transporting merchandise (12) according to any of claims 1 to 5, comprising a device (120) for guiding the roller shutter (30) which is able to guide the roller shutter (30) in translation along an upper face (25) of the roof (22) during its displacement between its open and closed positions.

7. Compartment for transporting merchandise (12) according to claim 6, in which the guide device (120) comprises at least one guide element (122), the or each guide element (122) comprising a longitudinal slide (124) which is integral with the roof (22) and a slider (126) mounted on the slide (124) so as to be movable in longitudinal translation relative to the roof (22), the slider (126) being attached to the roller shutter (30).

8. Compartment for transporting merchandise (12) according to claims 5 and 7, taken together, in which the flap (114) is articulated on the slider (126) and forms a connection piece of the slider (126) to the roller shutter (30).

9. Compartment for transporting merchandise (12) according to claim 7 or 8, in which the slide (124) is mounted directly on the upper face (25) of the roof (22).

10. Compartment for transporting merchandise (12) according to any of the preceding claims, in which the lamellae (58a, 58b) comprise intermediate lamellae (58a), each comprising a body (62) made of rigid material, a hooking element (63), and a connection element (64) made of flexible material connecting the hooking element (63) to the body (62), the hooking element (63) cooperating with a complementary element (71) formed in the body (62) of an adjacent lamella (58a, 58b), and the connecting element (64) forming a hinge (59) between said intermediate lamella (58a) and the adjacent lamella (58a, 58b).

11. Compartment for transporting merchandise (12) according to claim 10, in which the hooking element (63) is made of rigid material.

12. Compartment for transporting merchandise (12) according to claim 10 or 11, in which the body (62), the connection element (64) and the hooking element (63) are formed together by coextrusion of plastic materials.

13. Compartment for transporting merchandise (12) according to any of the preceding claims, in which the roller shutter (30) comprises, for each lamella (58a, 58b), two small wheels (90) each disposed at a transverse end (61) of the lamella (58a, 58b) and projecting towards the inside of the compartment (12) relative to a face (67) of the lamella (58a, 58b) orientated towards the inside of the compartment (12).

14. Vehicle for transporting merchandise (10) comprising a compartment (12) according to any of the preceding claims.
